# EUROPEAN PATENT APPLICATION

(11) **EP 1 577 750 A1**
(43) Date of publication of application: **21.09.2005**
(21) Application number: 02253407.7
(22) Date of filing: 15.05.2002
(51) Int. Cl.: G06F 9/40

(54) **Improved software application system**

(30) Priority: 15.05.2002 US 291418
(71) Applicant: Kirkwood, Andrew David, Chorlton M21 9DY (GB); Hannah, Paul, Manchester (GB)
(72) Inventor: Kirkwood, Andrew David, Chorlton M21 9DY (GB); Hannah, Paul, Manchester (GB)
(74) Representative: Wilson Gunn

(57) **Abstract**

A software application system comprises an application data file (11) and associated executable file (12). Data file (11) includes items (13a-d) and executable files and data files which are configured to generate a user interface (16). The data file is capable of task execution in conjunction with or independently of the application file.

## Description

The invention relates to an improved software application system.

Conventional software applications generally comprise an application file, usually in the form of an executable (.exe) file which carries out the functions of the software and a data file usually in the form of a (.dat) file which contains the data which is used by the executable file in the running of the application.

However, problems arise with such a system.

Firstly, in order for the application to execute the tasks properly, there are required to be multiple links between the executable file and the data file. Furthermore, usually with such an application is it not possible to modify or update the data file or application file at the end user stage if desired.

It is an object of the present invention to provide an improved software application system which overcomes or at least minimises the above-mentioned problems.

Thus and in accordance with the present invention there is provided an improved software application system comprising an application file in executable format and a data file containing data for use in execution of the application, wherein said data file is at least partially in executable format thereby enabling said data file to be capable of task execution in conjunction with or independently of the application file.

With this arrangement it is possible to provide a system in which a significant proportion of the functionality of the application can be imparted to the data file reducing to a minimum the functionality requirements of the application file.

By imparting functionality to the data file, user interaction with the data file is enabled allowing user modification and/or personalisation of certain elements thereof.

Preferably a part of said data file comprises data in executable files which define the look and feel of the application when executed on a computer display and most preferably this part of the file is configured so as to be capable of user modification. Preferably said data file also includes data and executable files to generate on-screen user controls preferably in the form of a user interface to allow control over the application by a user when running. Preferably these data items are also capable of user modification.

Preferably the data file contains data from many sources such as, for example, word processor documents, spread sheets, web pages. Each item of data can be independent or linked. Web pages, documents or spread sheets can, for example, be placed in the data file over the internet, a local intranet or manually.

Preferably the data file is configured to allow other objects to be associated with stored data item, whether by linking or otherwise, and the other objects may comprise text, audio or video files.

Preferably, where the data file includes web pages, the file can contain both the uniform resource locator (URL) list and the resource subjects associated or linked hereto. Alternatively the file can include the list only.

Preferably, at least one executable file in said data file is operable to execute the application executable file.

Preferably the application of the invention is configured to run independently of any other software running on the user's computer, for example, as internet browser, but may interact or interface with this software if desired or if appropriate. For example, the application may operate to cause execution of any other necessary applications on the computer to execute or view files stored in the data file.

The invention will now be described further by way of example only and with reference to the accompanying drawings, of which:
Figure 1 shows in schematic form one application system in accordance with the present invention; and
Figure 2 shows one example of user interface generated during operation of the application.

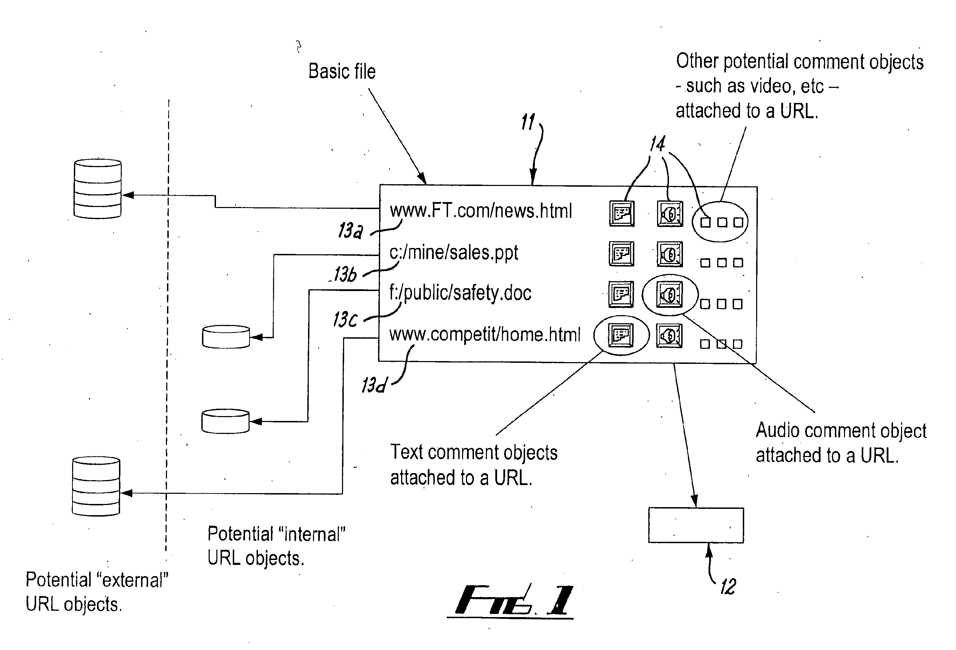

Referring now to Figure 1 there is shown an application comprising an application data file 11 and associated executable file 12 in accordance with the present invention. As can be seen, the data file 11 contains a number of different items 13a-d, all of different types and which are accessed in different ways. For example, the data file 11 is shown to contain two web pages 13a-d and these are external URL objects which are accessed by the internet. In these circumstances, the data file 11 may contain only the link to the web page or may contain the actual HTML files themselves. Two further documents are shown, a Power Point presentation 13b and a Word document 13c which are accessible over a local intranet. As an alternative to this, the entire files 13b,c may actually be stored within the data file 11 itself.

Text, video, audio or other comments or objects 14 are shown attached to various of the items stored.

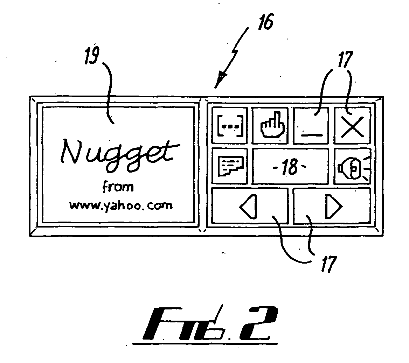

The data file 11 also contains executable files and data files in at least a part thereof which are configured to generate a user interface which allows the user to carry out a number of different operations whilst the application is running. One example of such a user interface 16 is shown in Figure 2. As can be seen, this interface consists of a number of user control buttons 17, a display area 18 and information space 19. Of course, the user interface 16 can be any desired configuration as appropriate and the interface shown is simply an example.

The display area 18 can be utilised to display items selected by the user stored in the data file 11. The information area 19 can be utilised to display advertising or other marketing information. For example, the area 19 can be used to display the corporate image of one particular company. The user control buttons 17 are utilised for performing user operations such as for example next data object, previous data object, play audio comment, close user interface, minimise user interface, e-mail data file.

The functionality of the data file and executable file of the application will now be described with reference to its operation upon execution.

The application can be launched in one of two ways. The data file 11 can be activated by, for example, double clicking on the file name within an operating system environment and this will lead to the application being launched. The executable files in the data file 11 will launch the application executable file and will cause generation of the user interface.

Alternatively, the application can be launched by activation of the application executable file by, for example, double clicking on the file name in the operating system and this will cause the application executable file 12 to interact with the data file 11, and the executable files therein, to cause generation of the user interface 16.

As previously discussed, the user interface 16 will be generated and will be independent of any other application which is running on the computer, for example, browser software or other application software. However, the application software may interact with the operating system software, browser software or other application software on the computer where such interaction is required to enable the application to function properly as hereinafter described.

It is envisaged that once the application is launched, a user will be able to interact with the interface 16 to allow certain data items 13 to be specified as being stored in the data file 11. For example, a user may be able to drag and drop files from other applications into the data file 11 using the user interface 16. The user can also, if desired, specify a path through the data items 13 stored in the data file 11 whereby a user can view these data files sequentially in a predetermined order by simply utilising the next data item and previous data item buttons 17 on the interface. The user can also specify a particular data item 13 which will be the first data item viewed upon launching the application.

Once a data file 11 has been created in accordance with a user's wishes, the data file 11 can be stored in any suitable location on the computer.

The user interface can enable the following functionality to the data file 11 by use of appropriate buttons 17 and each function will be set out below.

### NEXT FUNCTION

If this function is utilised by the user, the application will take the user to the next specified data item in the data file 11. To do this, the application will launch any associated application software necessary to enable the data item 13 to be displayed or executed. The application will also play or display any comment, any text, or audio or video object 14 associated with the data item. In moving to the next data item 13, it does not matter where that data item is stored whether it be stored on the same computer, on another computer in a local intranet or on another computer remotely over the internet. If the file of the data item is available on the same computer or over the local intranet, then it may be possible to view this file by launching only its associated application file. Where the data item is held on a remote computer and is accessible over the internet, it will of course be necessary for the application to launch an internet browser to allow the data item to be viewed.

### PREVIOUS

This operates similarly to the above-mentioned NEXT function and simply takes the user to the previous data item.

### PLAY MEDIA ASSOCIATED WITH CURRENT DATA ITEM.

If an object 14 in the form of text and/or audio and/or video is associated with the data item 13 being viewed then this can be automatically or otherwise displayed or played to a user. The display or play of the media may be undertaken within the application, if suitable executable files are provided, or can utilise application software run available on the computer upon which the application is running. The media can be played as many times as is required.

### HOME

Using this function, a user can move to the data item 13 which is defined as being the home item by the user.

### DOWN

It is possible for data items 13 within the data file to be stored on a multi-layer structure. If this is the case, it may be necessary to move downwards through the structure rather than simply from one data item to another at the same level. If this function is utilised, the user is taken to the next data item down in the data file if one exists.

### UP

This function takes a user to the corresponding data item 13 in the next level up as with the down function.

### SAVE/SAVE AS

This function allows a user to save the data items onto the data file once selected. It also allows the data file 11 to be saved onto a computer at a position which can be specified by a user.

### OPEN

This function allows a user to open a suitable dialogue to allow data files stored on the computer to be selected for viewing. Each stored data file 11 will contain executable files which will enable the application to run, in conjunction with the application executable files independently of each other.

### MINIMISE

This function allows the user to minimise the user interface to a host computer toolbar.

### CLOSE

This function allows the user to close the user interface 16 and end execution of the application. The function can be configured to prompt a user to first save any data items 13 selected for the data list being viewed when the close function is activated.

### NEW

This function enables the user to open a new data file in which new data items can be stored.

### COMMENTS

This function enables the user to enable or suppress the display of text, audio or video objects 14 associated with data items in the data file.

### CONTENT

This function allows a user to view the contents of a data file 11 and may also be configured to allow manipulation thereof such as, for example, the order in which the contents are to be displayed.

### FREEZE/UNFREEZE

This function allows a user to attach a copy of a data item 13 in full to the data file 11 rather than simply a link to the full copy of the data file which may be contained elsewhere. The function will also allow a copy retained in the data file to be removed should a user wish to do so. The function may also provide an update function whereby new copies of the same but updated data item can replace previously held data items in the data file.

### ADD/DELETE/EDIT/MOVE

These functions allow the user to add, delete, edit or move data items within the current data file. It is anticipated that this function will not be available to the data items which are used in the generation of the user interface or the personalisation of the user interface such as the type of control buttons provided and the size and shape of the display and information areas. It will also not allow any information presented on the information area to be modified or amended by the user.

It will be appreciated that once a user has an application executable file present on their computer, they will be able to execute any suitable data file with which they are provided. Because the data file can store data in a suitably compressed form, it is possible for the data files to be maintained at relatively small size making it simple for such files to be forwarded to persons by way of e-mail or in any other suitable manner.

This enables the application software to be used in a number of areas. For example, if a company or retail outlet knows that potential customers have the application executable file 12 on their computer, they can generate a data file with appropriate data items of interest to potential customers stored in that file. Because the data file 11 contains a suitable proportion of the functionality of the application, it is possible for that company or retail outlet to personalise the look and feel of the application to their own needs. For example, the user interface 16 associated with the data file can be configured in a manner which reflect the corporate identity of the company or retailer who has generated that data file. In fact, executable files can be contained within the data file which allows the user to forward appropriate details such as for example, orders or purchasing information to the company or retail outlet simply by emailing the data file to the company or retail outlet once the application has been closed down.

Other areas of application can easily be envisaged.

For example, electronic newsletters can be formed by data files formed in applications of this type. All the data for inclusion in the newsletter is retained within the data file 11 with a path specified through data indicating the sequence in which the data should be viewed. Furthermore, the data file can contain information relating to houses to be sold by an estate agent for example and in this circumstance the data file retains all the necessary information in relation to a number of houses, for example, suitable photographs and sales particulars. In this case, the details can be emailed to potential customers simply by emailing the data file if they already have the application executable file on their computer. The data file can be updated as the new properties appear on the market and these can also be emailed to potential customers.

It will also be appreciated that the system of the present invention can be used to generate a virtual web site insofar as all necessary information which could be included on a web site could be contained within the data file and emailed to appropriate parties or accessed over a local internet network.

Whilst a number of examples are given above it will be appreciated that the system of the invention can be used in any circumstance where a collection of data is required to be maintained, updated or provided to a number of different parties in a simple and convenient manner.

It is of course to be understood that the invention is not intended to be restricted to details above but in which to be described by way of example only.

## Claims

1. A software application system comprising an application file in executable format and a data file containing data for use in execution of the application, **characterised in that** said data file is at least partially in executable format thereby enabling said data file to be capable of task execution in conjunction with or independently of the application file.

2. An application system according to Claim 1 **characterised in that** a part of said data file comprises data in executable files which define the look and feel of the application when executed on a computer display.

3. An application system according to Claim 2 **characterised in that** said part of the data file is configured so as to be capable of user modification.

4. An application system according to Claim 2 or Claim 3 **characterised in that** said data file also includes data and executable files to generate on-screen user controls in the form of a user interface to allow control over the application by a user when running.

5. An application system according to any preceding claim **characterised in that** said data file contains data from many sources, and each item of data is independent or linked.

6. An application system according to Claim 5 wherein that data file is configured to allow other objects to be associated with stored data items by linking or otherwise, said other objects comprising text, audio or video files.

7. An application system according to Claim 6 wherein the data file includes web pages and contains both the uniform resource locator (URL) list and the resource subjects associated or linked thereto.

8. An application system according to Claim 1 wherein at least one executable file in said data file is operable to execute the application executable file.

9. An application system according to Claim 1 wherein the application system is configured to run independently of any other software running in the user's computer, but can interact or interface with such software if desired or appropriate.
